# EUROPEAN PATENT APPLICATION

(11) **EP 1 462 418 A1**
(43) Date of publication of application: **29.09.2004**
(21) Application number: 02783690.7
(22) Date of filing: 29.11.2002
(51) Int. Cl.: C03B 1/00, C03C 1/00, C03C 17/02

(54) **METHOD FOR PRODUCING FLAT GLASS, GLASS CULLET TO BE USED IN THE METHOD**

(30) Priority: 30.11.2001 JP 2001367595; 21.05.2002 JP 2002145989
(71) Applicant: Nippon Sheet Glass Company, Limited, Osaka-shi, Osaka 541-8559 (JP)
(72) Inventor: INOGUCHI, Kazuyuki, c/o NIPPON SHEET GLASS CO. LTD, Osaka-shi, Osaka 541-8559 (JP); TSUJINO, Toshifumi, c/o NIPPON SHEET GLASS CO. LTD, Osaka-shi, Osaka 541-8559 (JP); SETO, Hiromitsu, c/o NIPPON SHEET GLASS CO., LTD., Osaka-shi, Osaka 541-8559 (JP); KOYAMA, Akihiro, c/o NIPPON SHEET GLASS CO., LTD., Osaka-shi, Osaka 541-8559 (JP); KAMITANI, Kazutaka, c/o NIPPON SHEET GLASS CO. LTD, Osaka-shi, Osaka 541-8559 (JP)
(74) Representative: Intès, Didier Gérard André
(86) International application number: PCT/JP2002/012482
(87) International publication number: WO 2003/045858

(57) **Abstract**

The present invention provides a method for manufacturing a glass sheet in which a raw material containing glass cullets is melted to form the glass sheet, wherein the glass cullets include a colored film and this colored film contains an alkali metal oxide, a silicon oxide, and fine particles containing carbon as their main component. The glass cullets can be recycled as a part of the raw material for glass in spite of the colored film included therein since in the glass cullets, the fine particles containing carbon as their main component are contained as a colorant.

## Description

### TECHNICAL FIELD

The present invention relates to a method of manufacturing a glass sheet using a glass sheet with a colored film as cutlets.

### BACKGROUND ART

In the field of glass for automobiles, as a glass sheet to be attached to a car body with, for example, an adhesive, a glass sheet with a colored film is used in which its peripheral part is coated with a ceramic color in order to prevent the adhesive from deteriorating due to ultraviolet rays of sunlight and to provide it with a fine appearance.

The ceramic color contains about 20 mass% of pigment that includes ions of transition metal such as, for instance, Cr, Fe, Co, Ni, or Cu as its base. In a conventional clear float glass, the amount of transition metal is less than 1%. Even a slight amount, for example, tens of ppm, of the transition metal affects its color tone and makes it perceivable that the transition metal is contained therein. It therefore is impossible at present to recycle the part coated with the ceramic color by remelting it. This part may be used as a recycled material indirectly for other materials such as, for instance, roadbed materials or has to be disposed as waste.

Conventionally, there were some glasses with a ceramic color containing lead. Recently, however, the use of lead has been limited for the purpose of environmental protection.

New ceramic colors that are free from lead have been proposed and include, for instance, P₂O₅-based and alkali metal oxide-ZnO-B₂O₃-SiO₂-based ceramic colors.

The P₂O₅-based compositions are glass compositions and frit compositions disclosed in JP7(1995)-69672A, JP8(1996)-183632A, and JP9(1997)-208259A.

Furthermore, as the alkali metal oxide-ZnO-B₂O₃-SiO₂-based composition is a ceramic color composition disclosed in JP8(1996)-133784A.

The respective compositions mentioned above, however, have problems such as low acid resistance, a big difference in coefficient of expansion, etc. The aforementioned P₂O₅-based composition is composed of P₂O₅, an alkali metal oxide, an alkaline earth oxide, etc. Hence, the temperature dependency of its coefficient of expansion is higher than that of a float glass having a soda-lime silica composition that often is used as a substrate. Such a difference in coefficient of expansion causes a strain in heating and cooling a glass substrate and degrades the strength of a colored film and glass.

Moreover, the above-mentioned alkali metal oxide-ZnO-B₂O₃-SiO₂-based composition contains 10% to 20% of B₂O₃ and 35% to 45% of ZnO and thereby has lower acid resistance.

Glasses coated with these ceramic colors are free from lead but contain considerable amounts of P₂O₅, ZnO, B₂O₃, etc. that essentially are not contained in a float glass as described above. Consequently, it is impossible to use them as a cullet raw material to be used for a float glass having a soda-lime silica composition.

### DISCLOSURE OF THE INVENTION

With the above in mind, the present invention is intended to provide a technique that allows a glass sheet with a colored film to be used as a material for a glass required to be of high quality, especially as cullets to be used in the float process.

As a result of keen studies made assiduously, in the present invention, a colored film that coats at least a part of a surface of a glass substrate is formed with fine particles containing carbon as their main component dispersed in a film containing a silicon oxide and an alkali metal oxide.

In the present specification, the "main component" denotes a component that accounts for at least 50 mass% of the whole.

This colored film can be formed as one having a light-shielding function through the use of the fine particles containing carbon as their main component even when it is substantially free from transition metal such as Cr, Fe, Co, Ni, or Cu that serves as a colorant.

In this connection, the expression "substantially free" denotes that the amount of transition metal contained therein as an impurity is allowable and specifically, is in the range of not more than about 1 mass%, preferably in the range of not more than 100 ppm.

When the glass substrate with the colored film is used as cullets to be a part of a raw material for glass, the fine particles containing carbon as their main component that serves as a colorant react with oxygen when melting the raw material to become carbon dioxide and volatilize. Hence, the molten glass is not colored. Consequently, the glass substrate with the colored film readily can be recycled as cullets.

In other words, according to one aspect of the present invention, there are provided a method of manufacturing a glass sheet in which a raw material including glass cullets is melted to form the glass sheet, wherein the glass cullets include a colored film and this colored film contains an alkali metal oxide, a silicon oxide, and fine particles containing carbon as their main component, and a glass sheet obtained by this method.

According to another aspect of the present invention, there are provided glass cullets that include both glass cullets including a colored film and those including no colored film, wherein the colored film contains an alkali metal oxide, a silicon oxide, and fine particles that include carbon as their main component.

The glass cullets can be used as a part of the raw material for glass without requiring a bothersome process of removing the cullets including a colored film formed thereon to obtain the cullets including no colored film.

### BRIEF DESCRIPTION OF DRAWINGS

FIG. 1 is a cross-sectional partial view showing an example of a glass sheet with a colored film that provides cullets of the present invention.
FIG. 2 is a cross-sectional view showing an example of a glass sheet with a colored film that provides cullets of the present invention.
FIG. 3 is a cross-sectional view showing an example of a laminated glass including a glass sheet with a colored film that provides cullets of the present invention.
FIG. 4 is a plan view showing an example of a laminated glass including a glass sheet with a colored film that provides cullets of the present invention.
FIG. 5 is a diagram showing the configuration of a float apparatus that can be used for carrying out the method of the present invention.

### BEST MODE FOR CARRYING OUT THE INVENTION

Generally, a float glass contains, as its main components, an alkali metal oxide, an alkaline earth metal oxide, and SiO₂. In order to use a glass sheet with a colored film as a cullet raw material for a float glass, it is preferable that the colored film is substantially free from components that generally are not contained in a float glass, for example, TiO₂, ZnO, ZrO₂, P₂O₅, or La₂O₃. Furthermore, it is preferable that the colored film is substantially free from transition metal that can be a coloring component, for example, Ti, V, Cr, Mn, Fe, Co, Ni, Cu, or Mo.

Particularly, when a glass sheet with a colored film containing CoO, Cr₂O₃, CuO, NiO, or MnO is mixed in as a cullet raw material for a clear glass or glass containing a different coloring component from that of the colored film, it is difficult to obtain a glass sheet having desired optical characteristics (transparency, coloration, etc.). Preferably, the colored film is substantially free from these metal oxides. In addition, cadmium sulfide or antimony sulfide may form colloids in glass to color the glass in some cases. Accordingly, it is preferable that the colored film is substantially free from these elements and compounds thereof. With consideration given to the environment, it is preferable that the colored film is substantially free from lead.

From the viewpoints mentioned above, it is preferable that the colored film is substantially free from Ti, Zn, Zr, P, La, Co, Cr, Cu, Ni, Mn, Cd, Sb, and Pb.

The fine particles containing carbon as their main component serve as a colorant that does not prevent the glass sheet from being recycled as cullets. In order to use the fine particles, it is preferable that the colored film is formed to be an amorphous film (a vitreous film) and thereby the oxygen-shielding function of the colored film is secured. This can prevent the fine particles containing carbon as their main component from being oxidized even if the glass substrate is heated to a high temperature in forming the colored film. In order to allow the colored film to be vitreous, it may contain an alkali metal oxide and a silicon oxide.

Preferably, the colored film contains, in terms of mass%:
8% to 23% of alkali metal oxide;
40% to 75% of silicon oxide; and
3% to 45% of fine particles,
and more preferably,
10% to 23% of alkali metal oxide;
49% to 73% of silicon oxide; and
16% to 40% of fine particles.

When the film is formed of silicon oxide alone, the fine particles containing carbon as their main component may be burnt in a high temperature atmosphere employed, for example, in a step of sintering the colored film. The alkali metal oxide inhibits the burning.

The colored film may contain one type of alkali metal oxide but preferably, it contains at least two types of alkali metal oxides. The use of at least two types of alkali metal oxides makes it possible to obtain a hard colored film that is excellent in moisture resistance and chemical resistance (acid resistance and alkali resistance).

The phenomenon that generally is referred to as a "mixed alkali effect" is one that when a part of alkali is substituted by another alkali element, its characteristics deviate from the sum rule considerably even when the total content of alkali is not changed. Examples of characteristics that are changed considerably by the mixed alkali effect include chemical resistance that is typified by water resistance, acid resistance, and alkali resistance, electrical conductivity, and a diffusion coefficient.

The mixed alkali effect in an amorphous and vitreous colored film lowers the mobility of alkali, suppresses alkaline elution, and thereby can improve the moisture resistance.

The following description is directed to a preferred embodiment of the colored film and reasons for limiting its components. The contents of components described bellow are indicated in mass%.

When the alkali metal oxide includes only one type of alkali metal, it is advantageous that this alkali metal is sodium.

With respect to Na₂O, it is not preferable that its content is less than 1%, because less than 1% of Na₂O results in deterioration in alkali resistance of the colored film and an excessively low coefficient of thermal expansion that in turn degrades the strength of the glass and colored film. A preferred content of Na₂O is at least 5%. On the other hand, it also is not preferable that the content of Na₂O exceeds 18%, because more than 18% of Na₂O results in an excessively high coefficient of thermal expansion that causes a large shrinkage of the film when it is dried or sintered and thereby cracks tend to occur in the colored film. A further preferred content of Na₂O is 15% or less.

When at least two types of alkali metal oxides are included, it is advantageous that the at least two types of alkali metal oxides include, together with sodium, at least one selected from potassium and lithium.

K₂O and/or Li₂O improves the moisture resistance and chemical resistance of the colored film when being contained together with Na₂O. When the total content of K₂O and Li₂O is less than 0.1%, the water resistance and the moisture resistance cannot be improved satisfactorily. Accordingly, the total content is preferably at least 1%. The total content of K₂O and Li₂O exceeding 19% results in an excessively high coefficient of thermal expansion that causes a large shrinkage of the film when it is dried or sintered, as in the case of Na₂O. This results in cracks tending to occur in the colored film. The total content of K₂O and Li₂O is preferably 12% or less.

The content of K₂O is preferably 18% or less, more preferably 11% or less, while the content of Li₂O is preferably 10% or less, more preferably 5% or less.

The silicon oxide is, for example, SiO₂, and SiO₂ serves as a network former in a vitreous film. A content of SiO₂ of less than 40% results in degradation in the strength of the colored film and also causes the alkali resistance to deteriorate. Hence, the content of SiO₂ is preferably at least 40%, more preferably at least 50%.

On the other hand, a content of SiO₂ exceeding 70% results in a lower coefficient of thermal expansion. This results in a greater difference in coefficient of thermal expansion with that of a glass having a soda-lime silica composition. Furthermore, unlike the glass, the colored film is subjected to not only the shrinkage caused by the thermal expansion but also that caused by moisture loss. The shrinkage caused by the moisture loss is suppressed by the presence of alkali and the shrinkage caused by the thermal expansion therefore dominates. Hence, it is preferable that the content of SiO₂ is 70% or less.

The fine particles containing carbon as their main component affect the film strength as well as alkali resistance depending on their ratio to the silicon oxide and alkali metal oxide. Hence, it is preferable that the content of the colorant to be added is specifically in the range of 15% to 40%, more preferably in the range of 15% to 35%.

With consideration given to the above, it is preferable that the colored film contains, in terms of mass%:
1% to 18% of Na₂O;
0% to 18% of K₂O;
0% to 10% of Li₂O;
0.1% to 19% of K₂O + Li₂O;
40% to 70% of SiO₂; and
15% to 40% of fine particles,
and more preferably,
5% to 15% of Na₂O;
0% to 11% of K₂O;
0% to 5% of Li₂O;
1% to 12% of K₂O + Li₂O;
50% to 70% of SiO₂; and
15% to 35% of fine particles.

Examples of the fine particles containing carbon as their main component include carbon black, black lead (graphite) composed of carbon alone, azo pigment, phthalocyanine pigment, and fused polycyclic pigment, and a preferable form thereof is the form of fine particles. Carbon black fine particles are further preferable. Various carbon blacks are manufactured that have different characteristics depending on the manufacturing methods to be employed. Any of the carbon blacks may be used. Examples of carbon blacks manufactured by different methods include acetylene black, channel black, furnace black, and Ketjenblack (the trade name of a product of Lion Corporation). The diameter of the fine particles is not particularly limited.

The carbon black reacts with oxygen to become carbon dioxide and volatilizes not only at 1000°C or higher but also at a temperature close thereto. Usually, a float glass is manufactured by heating a raw material to at least 1000°C to melt it and then forming it into a float glass. Hence, in this melting process, the carbon black volatilizes and thus does not affect the coloration of the glass. Accordingly, when consideration is given to the recyclability, carbon black is a preferable colorant. Furthermore, since the carbon black provides a black appearance, it also is suitable as a ceramic color of glasses for automobiles.

The colored film contains an alkali metal oxide and fine particles and therefore shrinks less during its formation than a film formed of a silicon oxide alone. Accordingly, the stress caused between the colored film and the substrate can be eased.

For example, when a thick vitreous film is to be formed directly by a sol-gel process, cracks occur due to the stress caused between itself and the substrate. Hence, in order to obtain a thick film, a plurality of thin films that each cause less stress have to be formed to be stacked together.

On the contrary, application of the above makes it possible to obtain a film having a desired thickness, for instance, a colored film with a thickness of 1 to 20 µm, through film formation carried out only once. When a film is formed of a silicon oxide and fine particles alone, it merely can have a thickness of about several hundreds of nanometers.

In the case where it is necessary to further improve the water resistance and moisture resistance of the colored film, the colored film may be subjected to dealkalization after its formation. The alkali metal oxide is a component that is essential in forming the colored film to be amorphous to secure its oxygen-shielding function. Hence, for example, a colored film is allowed to contain plenty of alkali metal oxide (preferably at least 8 mass%) when being sintered in the heating step and thereby is formed as an amorphous film that is excellent in the oxygen-shielding function, and thereafter, the alkali metal oxide is reduced (preferably to 5 mass% or less). This eases the oxidation of the fine particles containing carbon as their main component and prevents the colored film from deteriorating.

A polar solvent is not particularly limited. However, it is advantageous that the polar solvent contains, for example, at least one selected from water and alcohol with a carbon number of 3 or smaller, preferably water. The polar solvent may contain acid. Particularly, an aqueous solution containing acid is suitable for the reduction of the alkali metal oxide. The water is not particularly limited and may be, for instance, tap water, distilled water, or ion exchanged water.

The acid is not particularly limited. As the acid may be used various acids defined in, for instance, Arrhenius, Bronsted-Lowry, Lewis, Cady & Elsey. The acid may be organic acid but at least one inorganic acid selected from hydrochloric acid, sulfuric acid, nitric acid, hydrofluoric acid, and phosphoric acid is suitable.

When acid is used, it is preferable that a step of reducing the acid contained in the colored film, i.e. a neutralization step, is carried out by bringing at least a polar solvent into contact with the colored film additionally after a polar solvent containing acid is brought into contact therewith.

As the solvent to be used for the neutralization may be employed, for instance, water as in the above or a basic solution containing a hydroxyl group-containing compound such as, for example, NaOH, Ca(OH)₂, or Al(OH)₃.

The method of bringing a solvent into contact with the colored film is not particularly limited but may be immersion into a solvent (solution) or application with, for instance, cloth containing a solvent (solution).

It is preferable that after the dealkalization, the colored film contains 5 mass% of alkali metal oxide or less, and further specifically, in terms of mass%:
0.1% to 5% of alkali metal oxide;
55 % to 90% of silicon oxide; and
10% to 45% of fine particles.

It is preferable that the content of alkali metal oxide is as small as possible but the alkali metal oxide has no substantial influence as long as its content is 5 mass% or less.

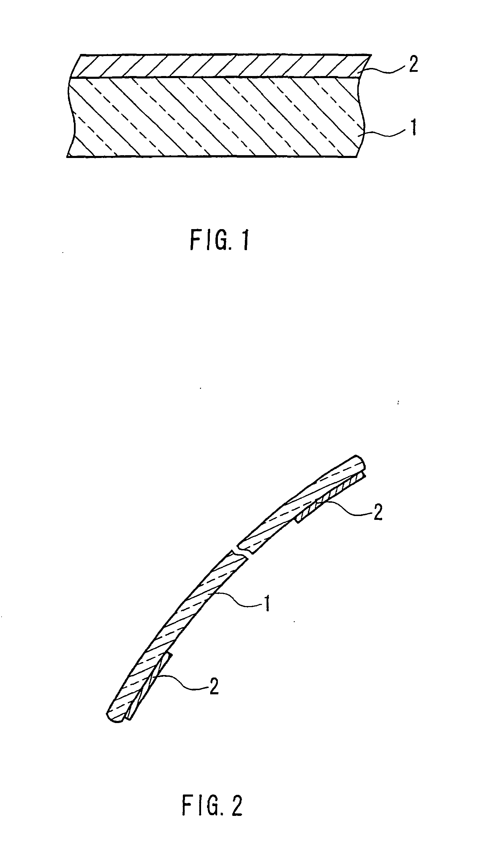

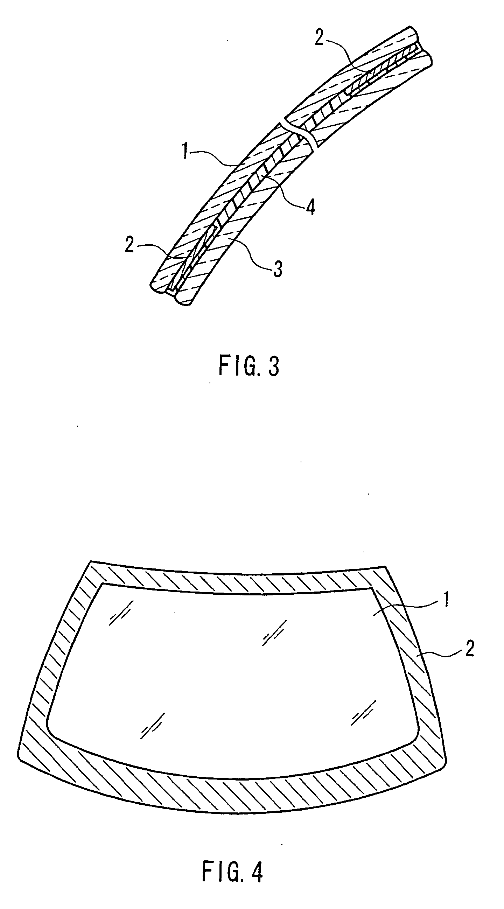

In the glass sheet with the colored film that provides glass cullets of the present invention, as shown in FIG. 1, a colored film 2 is formed on a glass sheet 1. As shown in FIG. 2, a glass sheet 1 may be bent. In this glass sheet 1, a colored film 2 is formed on its peripheral part. As shown in FIG. 3, a laminated glass may be formed in which a glass sheet 1 (a first glass sheet) with a colored film 2 formed thereon and another glass sheet (a second glass sheet) 3 are joined together with a thermoplastic resin film 4 such as polyvinyl butyral (PVB). As shown in FIG. 4, this laminated glass can be used as a windshield with the colored film 2 arranged in the form of a frame.

The glass sheets shown in the drawings also are examples of glass sheets that can be provided by the manufacturing method of the present invention. Glass sheets formed from a raw material containing glass cullets can be used as window glasses for buildings, window glasses for vehicles, etc. after they are subjected to, for example, at least one process selected from a tempering process and a bending process as required and in some cases, further a laminating process and the formation of a colored film.

Scrapped glass sheets are crushed to become glass cullets. From the respective glass sheets shown in the drawings are obtained glass cullets including cullets both with and without a colored film. The present invention makes it possible to avoid the selection of the glass cullets and the disposal of the glass cullets as industrial waste due to the troublesomeness of the selection.

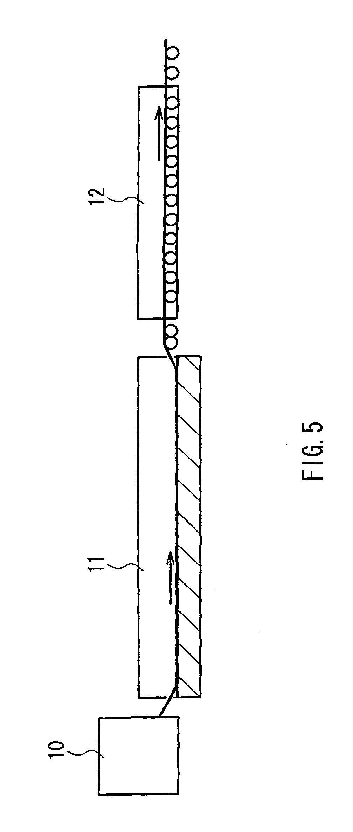

The float process using the glass cutlets as a part of a raw material for glass can be carried out according to the conventional method. For instance, as shown in FIG. 5, the raw material for glass is put into a melting furnace 10 to be melted at, for example, 1300°C to 1500°C and thereby a glass sheet is formed to have a predetermined thickness on molten tin inside a float furnace 11, which then is cooled in an annealing furnace 12. The glass cullets mixed into the raw material for glass allow the raw material for glass to be melted readily and reduce the energy required for the melting.

In the raw material for glass there may be used, together with the glass cullets, raw materials used commonly, for example, silica sand, Glauber's salt, limestone, and dolomite. With consideration given to the function, as a reductant, of carbon provided by the colored film, it is preferable that a required amount of oxidizer is added thereto. When the carbon functions as a reductant, iron contained in the glass is reduced excessively and thereby the content of Fe²⁺ may increase to cause color development that is undesirable for the glass.

A preferable oxidizer is at least one selected from nitrate and sulfate of sodium, sodium sulfate, and/or sodium nitrate. This oxidizer oxidizes organic compounds contained in a prepared batch of the raw material for glass to inhibit iron from being reduced. Furthermore, the sodium sulfate helps bubbles remaining in molten glass to be clarified and a glass melt to be homogenized.

The amount of oxidizer to be added depends on the amount of carbon formed in cullets that become a glass melt, the redox equilibrium state of the glass melt, etc. It, however, is advantageous that at least an amount of oxidizer is added that is larger than that of the reductant present in the glass melt containing cullets.

The manufacturing method in which the above-mentioned amount of oxidizer is added to the raw material is suitable for the manufacture of glass sheets containing iron whose total content expressed in terms of Fe₂O₃ is at least 0.05 mass%, further at least 0.3 mass%, and particularly at least 0.5 mass%. The iron includes bivalent iron and trivalent iron the ratio between which varies depending on its redox state and thus considerably affects the color tone of the glass.

### EXAMPLES

### Example 1

About 400 g of glass cullets including a colored film whose amount was about 0.1% in terms of mass% that had been formed on a glass sheet was melted in a platinum crucible at 1500°C for two hours. Glass thus obtained was maintained at 650°C for 45 minutes and then was cooled to room temperature. Thus, a sample was obtained.

This sample was ground to have a thickness of 5 mm and then its optical characteristics were measured (see Table 1). In Table 1, YA denotes visible light transmittance (%), TG solar radiation transmittance (%), Tuv ultraviolet transmittance (%), λd a dominant wavelength (nm), and Pe excitation purity. In addition, x and y indicate chromaticity coordinates obtained in the method of indicating chromaticity by the dominant wavelength and excitation purity. Furthermore, L*, a*, and b* denote psychometric lightness and psychometric chroma coordinates according to the L*a*b* color system. The colored film was formed by the following method.

First, 30 g of sodium silicate solution, 20 g of colloidal silica, and 50 g of carbon black (LION PASTE W-311N, manufactured by Lion Corporation) were weighed and then were mixed together. Thus, a solution containing fine particles to be used for forming a colored film (a liquid composition) was obtained that included a solid content of 3% of Na₂O, 13% of SiO₂, and 8% of carbon.

In this connection, the concept of the "solid content" is used in the field of, for example, the sol-gel process and the "solid content" denotes components contained in a solid body such as a film formed from a liquid composition. The "solid content" also includes components that have been dissolved in the liquid composition besides the fine particles.

This liquid composition was applied, with a spin coater, to the surface of a washed glass substrate having a soda-lime silicate glass composition. This was dried at room temperature for five minutes and then in a drying furnace at 190°C for 30 minutes. Thereafter, this glass substrate was put into a sintering furnace whose temperature had been raised to 680°C and thereby the colored film applied thereto was sintered for 120 seconds. The colored film thus obtained had a thickness of about 5 µm.

### Example 2

About 200 g of glass cullets including a colored film whose amount was about 0.1% in terms of mass% that had been formed on a glass sheet and a material composed of a batch of 200 g having the same composition and the same FeO ratio as those of the glass cullets and sodium sulfate added thereto as an oxidizer were melted in a platinum crucible at 1500°C for two hours.

Glass thus obtained was maintained at 650°C for 45 minutes and then was cooled slowly to room temperature. Thus, a sample was obtained. This sample was ground to have a thickness of 5 mm and then its optical characteristics were measured (see Table 1). The colored film was obtained in the same manner as in Example 1.

### Reference Example 1

400 g of glass cullets including no colored film was melted in a platinum crucible at 1500°C for two hours. Glass thus obtained was maintained at 650°C for 45 minutes and then was cooled to room temperature. Thus, a sample was obtained. This sample was ground to have a thickness of 5 mm and then its optical characteristics were measured (see Table 1).

**Table 1**

| | Example 1 | Example 2 | Reference Example 1 |
|---|---|---|---|
| Glass Thickness (mm) | 4.99 | 4.99 | 4.99 |
| YA (%) | 75.6 | 77.0 | 76.9 |
| TG (%) | 47.3 | 50.0 | 50.0 |
| Tuv | 26.5 | 25.7 | 25.8 |
| λd (nm) | 493.3 | 495.4 | 495.4 |
| Pe | 4.56 | 3.60 | 3.60 |
| x | 0.2973 | 0.2997 | 0.2997 |
| y | 0.3187 | 0.3200 | 0.3200 |
| L* | 90.52 | 91.00 | 90.99 |
| a* | -7.58 | -7.02 | -7.02 |
| b* | -1.17 | -0.33 | -0.33 |

With respect to the optical characteristics of Example 1, the variations in all the visible light transmittance, the solar radiation transmittance, and the ultraviolet transmittance from those of the reference example were within 3%. Furthermore, the visible light transmittance (75.6%) of Example 1 was higher than the standard value required for glasses for automobiles.

Moreover, no amber color developed by carbon was observed. All the variations in values concerning the color tone such as those of the excitation purity, the dominant wavelength, psychometric lightness, etc. also were within 1%.

The carbon amber is a phenomenon that Fe or Na reacts with SO₄²⁻ that is a S component contained in the glass, in a reducing atmosphere (in the presence of carbon) and the coloration of colloid generated thereby exhibits a blackish brown (i.e. an amber).

All the optical characteristics of Example 2 were substantially the same as those of Reference Example. As a result, it was confirmed that even when glass cullets including a colored film containing carbon as a colorant were used as a part of the raw material, the use of an oxidizer together with the glass cutlets prevented any effects on coloring of a glass from being caused in manufacturing the glass. The sample of Example 2 contained about 0.5% of iron in terms of Fe₂O₃.

### Example 3

30 g of sodium silicate solution (Water Glass No. 3, manufactured by KISHIDA CHEMICAL CO., LTD., hereinafter also referred to as "water glass"), 20 g of colloidal silica (PC500, manufactured by NISSAN CHEMICAL INDUSTRIES, LTD.), and 50 g of carbon black (LION PASTE W-311N, manufactured by Lion Corporation) were weighed and then were mixed together. Thus, a liquid composition for forming a colored film was obtained that included a solid content of 3% of Na₂O, 13% of SiO₂, and 8% of carbon. Table 2 shows the ratios of the solid content included in the liquid composition.

This liquid composition was applied, with a bar coater, to the surface of a washed glass substrate (100 × 100 × 2.1 mm) having a soda-lime silicate glass composition. This was dried at room temperature for five minutes and then in a drying furnace at 190°C for 40 minutes. Thereafter, this glass substrate was put into a sintering furnace whose temperature had been raised to 720°C and thereby the colored film applied thereto was sintered for 90 seconds. The colored film thus obtained had a thickness of about 5 µm. Table 2 shows the composition of the colored film and the conditions under which the colored film was formed.

The visible light transmittance and ultraviolet transmittance of the glass sheet with the colored film thus obtained were measured with a spectrophotometer (UVPC-3100, manufactured by Shimadzu Corporation). As a result, the visible light transmittance and ultraviolet transmittance each were 0.1% or lower with respect to the entire wavelength region concerned. Thus, it was proved that the colored film had a light-shielding function (see Table 2).

In order to examine the acid resistance and alkali (base) resistance of the colored film, the following test was carried out. That is, with a spectro-photometric type colorimeter (SE-2000, manufactured by Nippon Denshoku Industries Co., Ltd.) variations in lightness of the glass surface and the film surface caused when the glass sheet with the colored film was immersed in 0.1N sulfuric acid (an acid resistance test) and 0.1N sodium hydroxide (an alkali resistance test) solutions for 24 hours were determined.

As a result of the acid resistance test and alkali resistance test, it was proved that the lightness of both the colored film surface and the exposed glass surface did not vary. That is, it was proved that the colored film according to the present invention had an excellent resistance to acid and alkali.

The evaluation of hardness of the colored film was carried out using a Taber abrasion tester (5150 ABRASER, TABER INDUSTRIES) by rotating an abrasion ring against the glass sheet with the colored film 1000 times at a load of 500 g and determining the variations in transmittance caused between before and after the test. As a result, in the colored film according to the present invention, the transmittances obtained before and after the test did not vary with each other. Thus, it was proved that the colored film had considerably high hardness and excellent abrasion resistance (see Table 2).

Furthermore, in order to examine, in a simple manner, the influence that is caused when the liquid composition for forming the colored film is remelted as a cullet raw material in manufacturing glass, a high-temperature melting test was carried out. In the test, the liquid composition was heated up to 1300°C at a heating rate of 10°C/min using a TG-DTA analyzer (thermal analysis equipment TAS-100, manufactured by Rigaku Corporation).

The liquid composition thus melted was observed visually. Consequently, it was confirmed that the carbon serving as a colorant had been burnt to disappear and thereby the liquid composition was transparent. As a result, it was proved that the colored film had no influence on the coloration of the glass sheet even if it was contained in the cutlet raw material used in manufacturing the glass sheet.

**Table 2**

| Examples | 3 | 4 | 5 | 6 | 7 | 8 | 9 |
|---|---|---|---|---|---|---|---|
| Ratios of Solid Content included in Liquid Composition | | | | | | | |
| Na₂O (%) | 12 | 12 | 19 | 11 | 12 | 12 | 12 |
| SiO₂ (%) | 53 | 52 | 65 | 50 | 53 | 53 | 53 |
| C (%) | 35 | 36 | 16 | 39 | 35 | 35 | 35 |

| Conditions under which films were formed | | | | | | | |
|---|---|---|---|---|---|---|---|
| Pre-drying Temperature (°C) | Room Temperature | Room Temperature | Room Temperature | Room Temperature | Room Temperature | Room Temperature | Room Temperature |
| Pre-drying Time (min) | 5 | 5 | 5 | 60 | 120 | 20 | 20 |
| Post-drying Temperature (°C) | 190 | 190 | 190 | 190 | - | 140 | 240 |
| Post-drying Time (mm) | 40 | 15 | 30 | 15 | - | 60 | 20 |
| Sintering Temperature (°C) | 720 | 620 | 680 | 720 | 720 | 620 | 720 |
| Sintering Time (sec) | 90 | 600 | 120 | 90 | 80 | 240 | 80 |

| Film Composition | | | | | | | |
|---|---|---|---|---|---|---|---|
| Na₂O (%) | 16 | 19 | 12 | 21 | 14 | 17 | 15 |
| SiO₂ (%) | 61 | 73 | 75 | 59 | 58 | 74 | 66 |
| C (%) | 23 | 8 | 13 | 20 | 28 | 9 | 19 |

| Film Characteristics | | | | | | | |
|---|---|---|---|---|---|---|---|
| Ultraviolet and Visible-Light Transmittance (%) | <0.1 | <0.1 | <0.1 | <0.1 | <0.1 | <0.1 | <0.1 |
| Acid and Base Resistance | Good | Good | Good | Good | Good | Good | Good |
| Abrasion Resistance | Good | Good | Good | Good | Good | Good | Good |
| High-Temperature Melting Test | Good | Good | Good | Good | Good | Good | Good |
| *1 With respect to the acid and base resistance, "Good" indicates a variation in lightness ΔL of 1 or less. | | | | | | | |
| *2 With respect to the abrasion resistance, "Good" indicates a variation in visible light transmittance of 1% or less. | | | | | | | |
| *3 In the high-temperature melting test, "Good" indicates no coloring observed visually. | | | | | | | |

### Example 4

30 g of sodium silicate solution, 20 g of colloidal silica, and 50 g of carbon black (LION PASTE W-310A, manufactured by Lion Corporation) were weighed and then were mixed together. Thus, a liquid composition was obtained that included a solid content of 3% of Na₂O, 13% of SiO₂, and 9% of carbon.

This liquid composition was applied, with a spin coater, to the surface of a washed glass substrate having a soda-lime silicate glass composition. This was dried at room temperature for five minutes and then in a drying furnace at 190°C for 30 minutes. Thereafter, this glass substrate was put into a sintering furnace whose temperature had been raised to 680°C and thereby the colored film applied thereto was sintered for 120 seconds. The colored film thus obtained had a thickness of about 5 µm (see Table 2).

The visible light transmittance and ultraviolet transmittance of the glass sheet with the colored film thus obtained each were 0.1% or lower with respect to the entire wavelength region concerned. Thus, it was proved that the glass sheet with the colored film had a light-shielding function. Furthermore, various tests were carried out in the same manner as in Example 3. Table 2 shows the results.

### Examples 5 to 9

Glass sheets each provided with one of colored films having various film compositions indicated in Table 2 were produced and their characteristics were evaluated in the same manner as in Example 3. The results also are shown in Table 2.

As the results of Examples 5 to 9, the visible light transmittance and ultraviolet transmittance of all the glass sheets each provided with one of the colored films each were 0.1% or lower with respect to the entire wavelength region concerned. Thus, it was proved that they had a light-shielding function.

Moreover, as a result of melting the liquid compositions for forming the colored films at a high temperature, it was confirmed that in the liquid compositions thus melted, carbon had been burnt to disappear and thereby the liquid compositions were transparent.

### Example 10

30 g of sodium silicate solution (Water Glass No.3, manufactured by KISHIDA CHEMICAL CO., LTD.), 20 g of colloidal silica (PC500, manufactured by NISSAN CHEMICAL INDUSTRIES, LTD.), and 50 g of carbon black (LION PASTE W-311N, manufactured by Lion Corporation) were weighed and then were mixed together. Thus, a liquid composition for forming a colored film was obtained that included a solid content of 3% of Na₂O, 13% of SiO₂, and 8% of carbon.

This liquid composition was applied, with a bar coater, to the surface of a washed glass substrate (150 × 150 × 2.1 mm) having a soda-lime silicate glass composition. This was dried at room temperature for five minutes and then in a drying furnace at 190°C for 10 minutes. Thereafter, this glass substrate was put into a sintering furnace whose temperature had been raised to 720°C and thereby the colored film applied thereto was sintered for 120 seconds. Furthermore, the glass coated with the colored film was immersed in 0.1N sulfuric acid for two hours to be subjected to dealkalization. Subsequently, acid remaining on the surface was washed off with water and superfluous water was wiped off with cloth. The colored film thus obtained had a thickness of about 10 µm. Table 3 shows the composition of the film that has been subjected to the dealkalization.

The visible light transmittance and ultraviolet transmittance of the glass sheet with the colored film thus obtained each were 0.1% or lower with respect to the entire wavelength region concerned. Thus, it was proved that glass sheet had a light-shielding function of the colored film (see Table 3).

From the results of the acid resistance test and the alkali resistance test, it was proved that the lightness of both the colored film surface and the exposed glass surface did not vary.

In addition, the evaluation of hardness of the film was carried out in the same manner as in Example 3. As a result, transmittances obtained before and after the test did not vary with each other. Thus, it was proved that the colored film had considerably high hardness.

Furthermore, the liquid composition for forming the colored film was melted at a high temperature and thereby the meltability of the colorant was tested. As a result, it was confirmed that in the liquid composition obtained thus melted, carbon had been burnt to disappear and thereby the liquid composition was transparent.

Moreover, in order to check the moisture resistance, variations in lightness of the glass surface and the film surface caused after the glass sheet with the colored film was maintained, for 400 hours, inside a temperature and humidity tester (JLH-300, manufactured by ETAC Engineering Co.) that was kept at 50°C and a RH of 95% were determined with a spectre-photometric type colorimeter (SE-2000, manufactured by Nippon Denshoku Industries Co., Ltd.), and the film condition was observed visually. As a result, no variations in lightness were found in both the glass surface and the film surface, and peeling of the colored film did not occur.

### Examples 10 to 12

Glass sheets each provided with one of colored films having various film compositions indicated in Table 3 were produced and their characteristics were evaluated in the same manner as in Example 7. The results also are shown in Table 3.

As the results of Examples 10 to 12, the visible light transmittance and ultraviolet transmittance of all the glass sheets each provided with one of the colored films each were 0.1% or lower with respect to the entire wavelength region concerned. Thus, it was proved that they had a light-shielding function.

Moreover, as a result of melting the liquid compositions for forming the colored films at a high temperature, it was confirmed that in the liquid compositions thus melted, carbon had been burnt to disappear and thereby the liquid compositions were transparent.

**Table 3-1**

| | Example 10 | Example 11 | Example 12 |
|---|---|---|---|
| Film Composition Before Dealkalization | | | |
| Na₂O (%) | 12 | 19 | 11 |
| SiO₂ (%) | 53 | 65 | 50 |
| C (%) | 35 | 16 | 39 |

| Film Composition After Dealkalization | | | |
|---|---|---|---|
| Na₂O (%) | 1 | 1 | 0.4 |
| SiO₂ (%) | 59 | 78 | 83.6 |
| C (%) | 40 | 21 | 16 |

| Conditions under which films were formed | | | |
|---|---|---|---|
| Pre-drying Temperature (°C) | Room Temperature | Room Temperature | Room Temperature |
| Pre-drying Time (min) | 5 | 5 | 15 |
| Post-drying Temperature (°C) | 190 | 190 | 190 |
| Post-drying Time (min) | 10 | 30 | 15 |
| Sintering Temperature (°C) | 720 | 720 | 720 |
| Sintering Time (sec) | 120 | 90 | 90 |
| Dealkalization Time (hr) | 2 | 2 | 24 |

**Table 3-2**

| | Example 10 | Example 11 | Example 12 |
|---|---|---|---|
| Film Characteristics | | | |
| Ultraviolet and Visible-Light Transmittance (%) | <0.1 | <0.1 | <0.1 |
| Acid and Base Resistance | Good | Good | Good |
| Abrasion Resistance | Good | Good | Good |
| High-Temperature Melting Test | Good | Good | Good |
| Moisture Resistance | Good | Good | Good |

## Claims

1. A method for manufacturing a glass sheet from a raw material comprising glass cullets,
wherein the glass cullets comprise a colored film, and
the colored film comprises an alkali metal oxide, a silicon oxide, and fine particles that include carbon as their main component.

2. The method for manufacturing a glass sheet according to claim 1, wherein the raw material comprises an oxidizer.

3. The method for manufacturing a glass sheet according to claim 2, wherein the oxidizer comprises at least one selected from the group consisting of sulfate and nitrate of sodium.

4. The method for manufacturing a glass sheet according to claim 1, wherein the fine particles that include carbon as their main component are carbon black fine particles.

5. The method for manufacturing a glass sheet according to claim 1, wherein the colored film is substantially free from transition metal.

6. The method for manufacturing a glass sheet according to claim 1, wherein the colored film is substantially free from Ti, Zn, Zr, P, La, Co, Cr, Cu, Ni, Mn, Cd, Sb, and Pb.

7. A glass sheet obtained by the manufacturing method according to claim 1.

8. The glass sheet according to claim 7, wherein a total amount of iron is 0.05 mass% or more in terms of Fe₂O₃.

9. Glass cullets, comprising both a glass cullet that includes a colored film and a glass cullet that includes no colored film,
wherein the colored film comprises an alkali metal oxide, a silicon oxide, and fine particles that include carbon as their main component.
